# EUROPÄISCHE PATENTSCHRIFT

(11) **EP 2 911 919 B1**
(45) Veröffentlichungstag und Bekanntmachung des Hinweises auf die Patenterteilung: **25.04.2018**
(21) Anmeldenummer: 13779868.2
(22) Anmeldetag: 23.10.2013
(51) Int. Cl.: B60R 25/20, B60Q 1/00, B60Q 1/26, H01Q 1/06

(54) **KRAFTFAHRZEUG MIT LEUCHTE IN EINER ANTENNENEINRICHTUNG ZUM SIGNALISIEREN DES BETRIEBSZUSTANDES EINER SICHERUNGSANLAGE**
MOTOR VEHICLE HAVING A LAMP IN AN ANTENNA DEVICE FOR SIGNALLING THE OPERATING CONDITION OF A SAFETY INSTALLATION
VÉHICULE AUTOMOBILE MUNI D'UN TÉMOIN LUMINEUX INTÉGRÉ À UN SYSTÈME D'ANTENNE POUR SIGNALER L'ÉTAT DE FONCTIONNEMENT D'UNE INSTALLATION DE SÉCURITÉ

(30) Priorität: 24.10.2012 DE 102012219404
(43) Veröffentlichungstag der Anmeldung: 02.09.2015
(73) Patentinhaber: Bayerische Motoren Werke Aktiengesellschaft, 80809 München (DE)
(72) Erfinder: WALZIK, Werner, 85757 Karlsfeld (DE); BRUEGL, Juergen, 81669 Muenchen (DE); WÜNSCHE, Thomas, 80995 Muenchen (DE); KLIMKE, Max, 80798 München (DE)
(86) Internationale Anmeldenummer: PCT/EP2013/072104
(87) Internationale Veröffentlichungsnummer: WO 2014/064124

(56) Entgegenhaltungen:
- EP-A2- 1 391 358
- US-A1- 2012 074 841
- US-A1- 2012 242 466

## Beschreibung

Die Erfindung betrifft ein Kraftfahrzeug mit einer Diebstahlwarnanlage.

Kraftfahrzeuge mit Sicherungsanlage (z.B. Diebstahlwarnanlage und/oder Wegfahrsperre) sind seit langem bekannt. Die Signalisierung des Betriebszustandes der Sicherungsanlage wird dabei häufig anhand einer in den Innen-Rückspiegel integrierten Leuchte realisiert. Diese Art der Signalisierung des Betriebszustandes der Sicherungsanlage ist in der Regel nur für einen vor dem Kraftfahrzeug stehenden Beobachter gut wahrnehmbar und für eine Kombination mit weiteren Signalisierungen nicht geeignet.

Aus der EP1391358A2 ist es bekannt, ein Markenzeichen eines Kraftfahrzeuges in Abhängigkeit von einer Aktivierung einer Diebstahlwarnanlage zu beleuchten.

Aus der US2012/0074841 ist ein Kraftfahrzeug mit einem Lichtelement an einer Antenne bekannt.

Der Erfindung liegt nun die Aufgabe zu Grunde, ein Kraftfahrzeug anzugeben, durch das der Stand der Technik verbessert wird.

Diese Aufgabe wird durch die Merkmale des Hauptanspruchs gelöst. Vorteilhafte Weiterbildungen der Erfindung sind den abhängigen Ansprüchen zu entnehmen.

Die Erfindung basiert demnach auch auf dem Gedanken, die Signalisierung des Betriebszustandes einer Diebstahlwarnanlage eines Kraftfahrzeuges durch eine in eine Außenantenne des Kraftfahrzeuges integrierte Leuchte zu realisieren. Dadurch kann die Signalisierung aus allen Richtungen wahrnehmbar ausgeführt werden und einfach mit weiteren Signalisierungen kombiniert werden, für die beispielsweise auch eine Wahrnehmbarkeit für einen seitlich zum Kraftfahrzeug oder hinter dem Kraftfahrzeug stehenden Beobachter besonders wichtig ist.

Ein erfindungsgemäßes Kraftfahrzeug umfasst daher eine Diebstahlwarnanlage, eine erste Leuchte zum Signalisieren des Betriebszustandes der Diebstahlwarnanlage, insbesondere des Diebstahlwarnanlagensteuergeräts, und eine durch die Karosserie des Kraftfahrzeuges getragene und außerhalb der Karosserie angeordnete Antenneneinrichtung, wobei die erste Leuchte in die Antenneneinrichtung integriert ist, beispielsweise als Teil der Antenneneinrichtung ausgebildet ist. Beispielsweise teilen sich die Antenneneinrichtung und die erste Leuchte zumindest teilweise ein Gehäuse, sind die Antenneneinrichtung und die erste Leuchte über dieselbe Befestigungseinrichtung oder Trägereinrichtung mit dem Kraftfahrzeug verbunden oder wird die erste Leuchte durch die Antenneneinrichtung getragen oder gehalten.

Die Antenneneinrichtung umfasst ein Gehäuse und ist auf dem Kraftfahrzeugdach angeordnet.

Es ist vorgesehen, dass die erste Leuchte in Abhängigkeit von dem Betriebszustand der Diebstahlwarnanlage derart angesteuert wird, dass die Dauer des Aktivzustandes und/oder des Passivzustandes der ersten Leuchte von dem Betriebszustand der Diebstahlwarnanlage abhängen.

Es ist vorgesehen, dass die erste Leuchte im Bereitschaftszustand der Diebstahlwarnanlage alternierend in einen Aktivzustand und einen Passivzustand (Auszustand oder Zustand minimaler Lichtstärkeerzeugung) geschaltet wird, wobei die Dauer des Aktivzustands jeweils kleiner als 0,1 Sekunden ist und die Dauer des Passivzustandes zwischen einer Sekunde und zwei Sekunden liegt. Umfangreiche der Erfindung zu Grunde liegende Simulationen haben ergeben, dass durch diese Auswahl gewährleistet ist, dass einerseits die Signalisierung des Betriebszustandes der Sicherungsanalage ausreichend wahrnehmbar ist, aber andererseits auch nicht einen zu hohen Stromverbrauch erfordert. Letztgenanntes ist mit Blick auf den Ladezustand der Kraftfahrzeugbatterie besonders wichtig, da der Bereitschaftszustand der Diebstahlwarnanlage in der Regel bei stehendem Motor möglicherweise über mehrere Tage hinweg signalisiert wird.

Es ist vorgesehen, dass die erste Leuchte im Alarmzustand der Diebstahlwarnanlage alternierend in einen Aktivzustand und einen Passivzustand geschaltet wird, wobei die Dauer des Aktivzustands jeweils zwischen 0,1 Sekunden und einer Sekunde liegt und auch die Dauer des Passivzustandes jeweils zwischen 0,1 Sekunden und einer Sekunde liegt. Umfangreiche der Erfindung zu Grunde liegende Simulationen haben ergeben, dass durch diese Auswahl gewährleistet ist, dass die Signalisierung des Alarmzustandes der Sicherungsanalage besonders gut wahrnehmbar ist, aber dennoch nicht einen zu hohen Stromverbrauch erfordert, da der Alarmzustand in der Regel nur für kurze Zeit zu signalisieren ist.

Vorzugsweise umfasst die Antenneneinrichtung eine Mobilfunkantenne und/oder eine Antenne zum Empfang von Signalen eines satellitengestützten Navigationssystems.

Alternativ oder ergänzend weist die Antenneneinrichtung vorzugsweise die Gestalt einer Finne auf. Dadurch ist eine aerodynamisch günstige und aus allen Richtungen wahrnehmbare Signalisierung des Betriebszustandes der Diebstahlwarnanlage anhand einer in die Antenneneinrichtung integrierten ersten Leuchte möglich.

Vorzugsweise umfasst hierzu die erste Leuchte zumindest eine Leuchtdiode und einen Lichtleiter, wobei Licht der Leuchtdiode in den Lichtleiter eingekoppelt wird und entlang dem Lichtleiter durch geeignete Auskoppelelemente aus dem Lichtleiter ausgekoppelt wird. Bevorzugt ist dabei eine obere und/oder eine hintere Kante der Antenneneinrichtung teilweise oder im Wesentlichen durch den Lichtleiter gebildet und/oder wird das durch den Lichtleiter ausgekoppelte Licht im Wesentlichen an der Kante der Antenneneinrichtung ausgekoppelt.

Besonders bevorzugt weist die Antenneneinrichtung die Gestalt einer Finne auf, deren obere Kante in der Symmetrieebene des Kraftfahrzeugs verläuft. Der das Licht der ersten Leuchte abstrahlende Lichtleiter bildet vorzugsweise dadurch die obere Kante der Antenneneinrichtung, dass er auf dem Gehäuse der Antenneneinrichtung angeordnet ist, oder durch einen transparenten Teil des Gehäuses der Antenneneinrichtung gehalten wird oder eingefasst ist. Alternativ dazu kann der Lichtleiter zumindest teilweise den umlaufenden Rand des Fußes der Antenneneinrichtung bilden und dabei beispielsweise nahezu unmittelbar auf dem Kraftfahrzeugdach angeordnet sein.

Es ist dabei eine Weiterbildung, dass der Lichtleiter derart in die Antenneneinrichtung integriert ist, dass er für einen vor dem Kraftfahrzeug stehenden Beobachter, für einen hinter dem Kraftfahrzeug stehenden Beobachter und für einen seitlich zum Kraftfahrzeug stehenden Beobachter sichtbar ist.

Gemäß einer weiteren Ausführungsvariante ist eine zweite Leuchte zum Signalisieren des Betriebszustandes der Diebstahlwarnanlage vorgesehen, die im Innenraum des Kraftfahrzeuges angeordnet ist, und die mit der ersten Leuchte gekoppelt ist, insbesondere dadurch, dass beide durch das gleiche Diebstahlwarnanlagensteuergerät, insbesondere synchron, angesteuert werden oder synchronisiert werden. Vorzugsweise ist die erste Leuchte dazu mittels Verbindungsleitungen mit der zweiten Leuchte verbunden.

Die durch die erste Leuchte im Aktivzustand (Leuchtzustand oder Zustand maximaler Lichtstärkeerzeugung) erzeugte Lichtstärke ist vorzugsweise kleiner als 0,5 Candela, insbesondere kleiner als 0,1 Candela. Ergänzend oder alternativ dazu ist die durch die erste Leuchte im Aktivzustand erzeugte Lichtstärke größer als 0,01 Candela. Umfangreiche der Erfindung zu Grunde liegende Simulationen haben ergeben, dass durch diese Auswahl gewährleistet ist, dass die Signalisierung des Betriebszustandes der Sicherungsanalage für Beobachter außerhalb des Kraftfahrzeuges einerseits gut wahrnehmbar ist, aber andererseits für andere Verkehrsteilnehmer auch nicht störend oder ablenkend wirkt.

### G

Vorzugsweise ist die erste Leuchte derart ausgeführt ist, dass in Abhängigkeit von ihrer Ansteuerung durch die erste Leuchte Licht verschiedener Farbe abstrahlbar ist. Besonders bevorzugt umfasst die erste Leuchte dazu eine Mehrfarb-Leuchtdiode, wie beispielsweise eine RGB-Leuchtdiode, die über mehrere Verbindungsleitungen mit dem Diebstahlwarnanlagensteuergerät oder dem im Folgenden genannten Ladesteuergerät verbunden ist.

Eine besondere Ausführungsform der Erfindung sieht vor, dass die erste Leuchte in Abhängigkeit von dem Betriebszustand der Diebstahlwarnanlage angesteuert wird, insbesondere derart, dass die Farbe des durch die erste Leuchte abgestrahlten Lichts von dem Betriebszustand der Diebstahlwarnanlage abhängen.

Eine andere Weiterbildung der Erfindung sieht vor, dass das Kraftfahrzeug eine Ladeeinrichtung mit zugeordnetem Ladesteuergerät aufweist, bei dem die erste Leuchte, insbesondere in Kombination mit den oben genannten Abhängigkeiten von den Betriebszustand der Diebstahlwarnanlage, in Abhängigkeit von dem Betriebszustand der Ladeeinrichtung angesteuert wird, insbesondere derart, dass die Farbe des durch die erste Leuchte abgestrahlten Lichts und/oder die Dauer des Aktivzustandes und/oder des Passivzustandes der ersten Leuchte von dem Betriebszustand der Ladeeinrichtung abhängen.

Dadurch ist es möglich, mit einer Leuchte nicht nur den Betriebszustand der Diebstahlwarnanlage, sondern auch den Betriebszustand der Ladeeinrichtung zu vermitteln.

Eine weitere besonders vorteilhafte Ausführungsform der Erfindung sieht vor, dass die erste Leuchte in Abhängigkeit von dem Betriebszustand der Ladeeinrichtung und in Abhängigkeit von dem Betriebszustand der Diebstahlwarnanlage angesteuert wird, insbesondere derart, dass die Farbe des durch die erste Leuchte abgestrahlten Lichts von dem Betriebszustand der Ladeeinrichtung abhängt und die Dauer des Aktivzustandes und/oder des Passivzustandes der ersten Leuchte und/oder der zweiten Leuchte von dem Betriebszustand der Diebstahlwarnanlage abhängt.

Besonders bevorzugt ist dabei vorgesehen, dass der Betriebszustand der Diebstahlwarnanlage an das Ladesteuergerät signalisiert wird, und die erste Leuchte (abhängig von dem Betriebszustand der Diebstahlwarnanlage und dem Betriebszustand der Ladeeinrichtung) durch das Ladesteuergerät angesteuert wird, und, insbesondere nicht unmittelbar, durch das Steuergerät der Sicherungsanalage angesteuert wird.

Eine weitere besonders vorteilhafte Ausgestaltung der Erfindung sieht vor, dass durch die erste Leuchte Licht einer ersten Farbe erzeugt wird zur Signalisierung des Betriebszustandes der Diebstahlwarnanlage (hinsichtlich dieser ersten Farbe hängt die Dauer des Aktivzustandes und/oder des Passivzustandes der ersten Leuchte ab von dem Betriebszustand der Diebstahlwarnanlage), und bei dem durch die erste Leuchte Licht zumindest einer anderen Farbe erzeugt wird zur Signalisierung des Betriebszustandes der Ladeeinrichtung (die Auswahl der zumindest einen anderen Farbe aus einer Vielzahl möglicher Farben und/oder die Dauer des Aktivzustandes und/oder des Passivzustandes der ersten Leuchte hinsichtlich dieser Farbe hängt ab von dem Betriebszustand der Ladeeinrichtung).

Vorzugsweise wird dabei durch die erste Leuchte der Betriebszustand der Ladeeinrichtung und der Betriebszustand der Diebstahlwarnanlage parallel derart signalisiert, dass durch die erste Leuchte vorranging das Licht, insbesondere die Lichtfarbe, zur Signalisierung des Betriebszustandes der Diebstahlwarnanlage erzeugt und/oder abgestrahlt wird.

Beispielsweise hat die Erzeugung und Abstrahlung des Lichts der ersten Farbe gegenüber der Erzeugung und Abstrahlung des Lichts der zumindest einen anderen Farbe Vorrang. Sieht also die Signalisierung des Zustands der Ladeeinrichtung und die Signalisierung des Zustandes der Diebstahlwarnanlage zur gleichen Zeit einen Aktivzustand der ersten Leuchte, aber mit Licht verschiedener Farben vor, so wird durch die erste Leuchte das Licht mit der Farbe zur Signalisierung des Zustandes der Diebstahlwarnanlage abgestrahlt und vorzugsweise nicht das Licht mit der Farbe zur Signalisierung des Zustandes der Ladeeinrichtung. Alternativ dazu kann vorgesehen sein, dass die erste Farbe und die zumindest eine andere Farbe in diesem Fall gemischt werden.

Im Folgenden wird die Erfindung anhand von Beispielen unter Bezugnahme auf die folgenden Figuren näher erläutert:
- Figuren 1 bis 2: zeigen vereinfachte schematische Schnittdarstellungen verschiedener Ausführungsbeispiele einer Antenneneinrichtung;
- Figur 3: zeigt ein vereinfachtes Blockschaltbild einer Ausführungsvariante der Erfindung;
- Figur 4: zeigt verschiedene Signalverläufe.

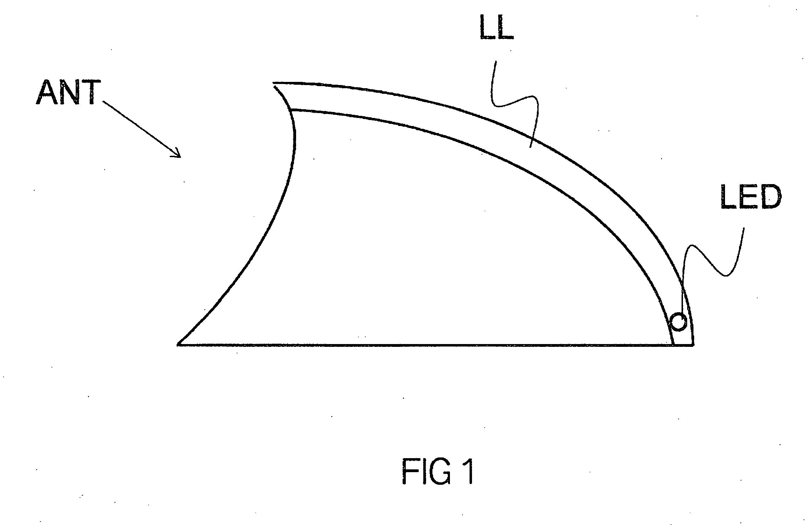

Figur 1 zeigt eine Schnittdarstellung einer Antenneneinrichtung ANT entlang der Symmetrieebene der Antenneneinrichtung ANT. Die Antenneneinrichtung ANT ist vorzugsweise derart auf einem Kraftfahrzeug angeordnet, dass die Symmetrieebene der Antenneneinrichtung ANT mit der Symmetrieebene des Kraftfahrzeuges identisch ist.

Die obere Kante der Antenneneinrichtung ANT ist geprägt durch einen auf der Antenneneinrichtung ANT angeordneten oder einen durch das Gehäuse der Antenneneinrichtung gehaltenen Lichtleiter LL. In den Lichtleiter LL wird Licht einer Leuchtdiode LED eingekoppelt, um die erfindungsgemäßen Signalisierungen zu realisieren. Bei der Leuchtdiode LED handelt es sich vorzugsweise um eine RGB-Leuchtdiode, die in der Lage ist, abhängig von ihrer Ansteuerung Licht verschiedener Farben zu erzeugen und abzustrahlen. Die Leuchtdiode LED ist beispielsweise neben dem Lichtleiter LL oder in einer Ausnehmung des Lichtleiters LL angeordnet. Durch die Leuchtdiode LED und den Lichtleiter LL wird eine erste Leuchte realisiert. Eine zweite Leuchte (nicht dargestellt) kann beispielsweise durch eine im Kraftfahrzeug angeordnete Leuchte realisiert sein.

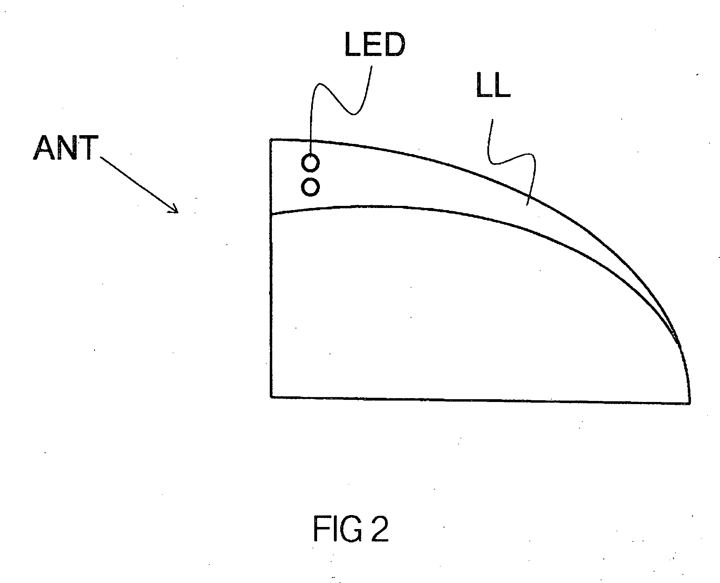

Figur 2 zeigt eine Schnittdarstellung einer alternativen Antenneneinrichtung ANT entlang der Symmetrieebene der Antenneneinrichtung ANT. Die Antenneneinrichtung ANT ist wieder vorzugsweise derart auf einem Kraftfahrzeug angeordnet, dass die Symmetrieebene der Antenneneinrichtung ANT mit der Symmetrieebene des Kraftfahrzeuges identisch ist.

Die obere Kante der Antenneneinrichtung ANT ist auch in dieser Variante geprägt durch einen auf der Antenneneinrichtung ANT angeordneten oder einen durch das Gehäuse der Antenneneinrichtung gehaltenen Lichtleiter LL. In den Lichtleiter LL wird in diesem Fall zur Realisierung der ersten Leuchte Licht von zwei Leuchtdioden LED eingekoppelt, um die erfindungsgemäßen Signalisierungen zu realisieren.

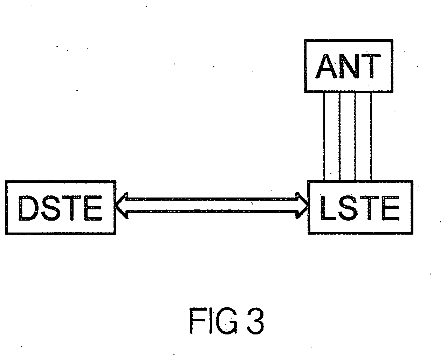

Figur 3 zeigt ein vereinfachtes Blockschaltbild eines Systems aus Diebstahlwarnanlage, Ladeeinrichtung und Antenneneinrichtung ANT, wobei in der Figur 3 die Diebstahlwarnanlage durch ein Diebstahlwarnanlagensteuergerät DSTE und die Ladeeinrichtung durch ein Ladesteuergerät LSTE repräsentiert werden.

Über eine Datenverbindung, wie beispielsweise einen Datenbus, wird der Betriebszustand (Alarmzustand oder Bereitschaftszustand) der Diebstahlwarnanlage, insbesondere des Diebstahlwarnanlagensteuergerätes DSTE, an das Ladesteuergerät LSTE übermittelt.

Die Antenneneinrichtung ANT, insbesondere die in der Antenneneinrichtung ANT integrierte erste Leuchte, wird dann beispielsweise über vier Verbindungsleitungen durch das Ladesteuergerät LSTE angesteuert.

Die Ansteuerung der ersten Leuchte erfolgt abhängig von dem Betriebszustand der Ladeeinrichtung (Ladebereitschaft, Laden, Vollgeladen, Fehler, ...) und dem Betriebszustand (Alarmzustand oder Bereitschaftszustand) der Diebstahlwarnanlage insbesondere derart, dass die Farbe, Dauer und/oder Intensität des durch die erste Leuchte erzeugten und in den Lichtleiter eingekoppelten Lichts von dem Betriebszustand der Ladeeinrichtung und dem Betriebszustand der Diebstahlwarnanlage abhängen.

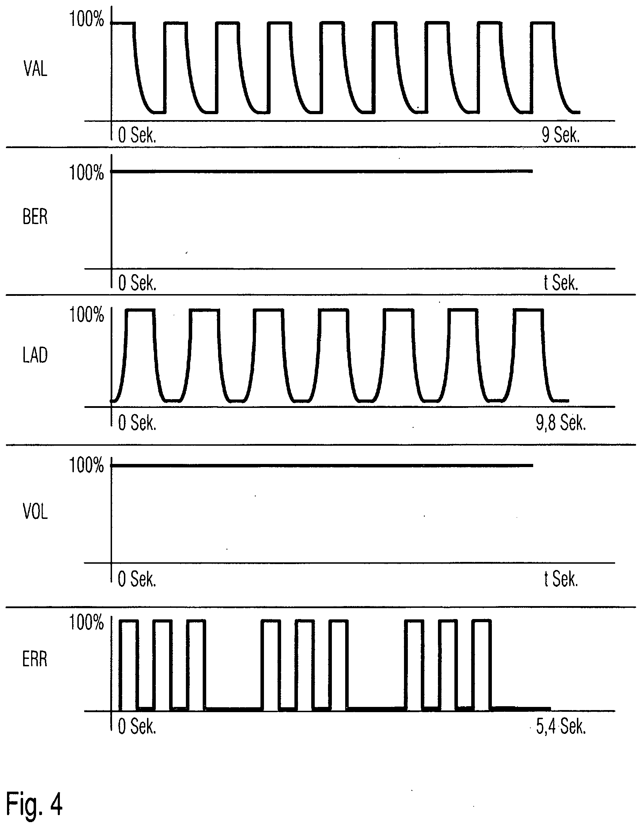

Anhand von Figur 4 soll im Folgenden ein Beispiel einer Signalisierung der Betriebszustände der Ladeeinrichtung und der Diebstahlwarnanlage erläutert werden.

In Figur 4 sind fünf alternative Signalisierungsverläufe für fünf verschieden Betriebszustände der Ladeeinrichtung dargestellt, die durch eine entsprechende Ansteuerung der ersten Leuchte durch das Ladesteuergerät erzeugt werden. Mit der Abszisse wird die Zeit dargestellt, mit der Ordinate die Intensität einer ausgewählten Lichtfarbe.

Der erste Signalisierungsverlauf bezieht sich auf die Farbe Orange und wird im Validierungsbetriebszustand VAL erzeugt, in dem die Ladeeinrichtung überprüft wird. Der zweite Signalisierungsverlauf bezieht sich auf die Farbe Blau und wird im Bereitschaftsbetriebszustand BER der Ladeeinrichtung erzeugt.

Der dritte Signalisierungsverlauf bezieht sich auf die Farbe Blau und wird im Ladebetriebszustand LAD der Ladeeinrichtung erzeugt.

Der vierte Signalisierungsverlauf bezieht sich auf die Farbe Grün und wird im Vollgeladen-Betriebszustand VOL der Ladeeinrichtung erzeugt.

Der fünfte Signalisierungsverlauf bezieht sich auf die Farbe Rot und wird im Fehler-Betriebszustand ERR der Ladeeinrichtung erzeugt.

Die verschiedenen Farben und Signalisierungsverläufe werden durch eine entsprechende Ansteuerung der ersten Leuchte, insbesondere der RGB-Leuchtdiode, bewirkt. Selbstverständlich können im Rahmen der Erfindung die genannten Farben Rot, Blau und Orange durch andere Farben ersetzt werden.

Zusätzlich zum Betriebszustand der Ladeeinrichtung wird mit der ersten Leuchte auch der Betriebszustand der Diebstahlwarnanlage signalisiert. Der Betriebszustand der Diebstahlwarnanlage wird beispielsweise durch die Farbe Rot signalisiert.

Der Signalisierungsverlauf zur Signalisierung des Bereitschaftszustandes der Diebstahlwarnanlage ist charakterisiert durch ein alternierendes Umschalten zwischen einem Aktivzustand (Leuchtzustand oder Zustand maximaler Lichtstärkeerzeugung) und einem Passivzustand (Auszustand oder Zustand minimaler Lichtstärkeerzeugung), wobei die Dauer des Aktivzustands jeweils kleiner als 0,1 Sekunden ist und die Dauer des Passivzustandes zwischen einer Sekunde und zwei Sekunden liegt.

Der Signalisierungsverlauf zur Signalisierung des Alarmzustandes der Diebstahlwarnanlage ist ebenfalls charakterisiert durch ein alternierendes Umschalten zwischen dem Aktivzustand und einem Passivzustand, wobei die Dauer des Aktivzustands jeweils zwischen 0,1 Sekunden und einer Sekunde liegt und auch die Dauer des Passivzustandes jeweils zwischen 0,1 Sekunden und einer Sekunde liegt.

Da der Betriebszustand der Ladeeinrichtung und der Betriebszustand der Diebstahlwarnanlage mit derselben ersten Leuchte, insbesondere derselben RGB-Leuchtdiode, verwirklicht wird, ist vorgesehen, dass in Zeiten, in denen sowohl der auf die Diebstahlwarnanlage bezogene Signalisierungsverlauf als auch der auf die Ladeeinrichtung bezogene Signalisierungsverlauf einen Aktivzustand der ersten Leuchte, insbesondere der RGB-Leuchtdiode, vorsieht, der auf die Diebstahlwarnanlage bezogene Signalisierungsverlauf Vorrang hat. In diesen Zeiten wird demnach der auf die Ladeeinrichtung bezogene Signalisierungsverlauf solange unterbrochen oder unterdrückt bis der auf die Diebstahlwarnanlage bezogene Signalisierungsverlauf wieder einen Passivzustand der ersten Leuchte, insbesondere der RGB-Leuchtdiode, vorsieht.

Eine bevorzugte Ausführungsvariante sieht vor, dass die Diebstahlwarnanlage zusätzlich zur Diebstahlwarnanlage eine Wegfahrsperre umfasst, wobei der Bereitschaftsmodus der Wegfahrsperre durch die Generierung von blauem Licht und der Manipulationszustand der Wegfahrsperre durch die Generierung von rotem Licht durch die erste Leuchte signalisiert wird.

Auch bei dieser Ausführungsvariante ist vorzugsweise wieder vorgesehen, dass in Zeiten, in denen sowohl der auf die Diebstahlwarnanlage bezogene Signalisierungsverlauf als auch der auf die Ladeeinrichtung bezogene Signalisierungsverlauf einen Aktivzustand der ersten Leuchte, insbesondere der RGB-Leuchtdiode, vorsieht, der auf die Diebstahlwarnanlage bezogene Signalisierungsverlauf Vorrang hat.

## Patentansprüche

1. Kraftfahrzeug
- mit einer Diebstahlwarnanlage,
- mit einer ersten Leuchte zum Signalisieren des Betriebszustandes der Diebstahlwarnanlage und
- mit einer durch die Karosserie des Kraftfahrzeuges getragenen und außerhalb der Karosserie angeordneten Antenneneinrichtung,
- bei dem die erste Leuchte in die Antenneneinrichtung integriert ist,
- bei dem die Antenneneinrichtung auf dem Kraftfahrzeugdach angeordnet ist,
- bei dem die erste Leuchte in Abhängigkeit von dem Betriebszustand der Diebstahlwarnanlage derart angesteuert wird, dass die Dauer eines Aktivzustandes und/oder eines Passivzustandes der ersten Leuchte von dem Betriebszustand der Diebstahlwarnanlage abhängen,
bei dem die erste Leuchte im Bereitschaftszustand der Diebstahlwarnanlage alternierend in einen Aktivzustand und einen Passivzustand geschaltet wird, wobei die Dauer des Aktivzustands jeweils kleiner als 0,1 Sekunden ist und die Dauer des Passivzustandes zwischen einer Sekunde und zwei Sekunden liegt und
bei dem die erste Leuchte im Alarmzustand der Diebstahlwarnanlage alternierend in einen Aktivzustand und einen Passivzustand geschaltet wird, wobei die Dauer des Aktivzustands jeweils zwischen 0,1 Sekunden und einer Sekunde liegt und die Dauer des Passivzustandes jeweils zwischen 0,1 Sekunden und einer Sekunde liegt.

2. Kraftfahrzeug nach Anspruch 1,
bei dem die Antenneneinrichtung eine Mobilfunkantenne umfasst.

3. Kraftfahrzeug nach einem der vorhergehenden Ansprüche,
bei dem die Antenneneinrichtung die Gestalt einer Finne aufweist.

4. Kraftfahrzeug nach einem der vorhergehenden Ansprüche,
bei dem die erste Leuchte eine Leuchtdiode und einen Lichtleiter umfasst, wobei Licht der Leuchtdiode in den Lichtleiter eingekoppelt wird.

5. Kraftfahrzeug nach einem der vorhergehenden Ansprüche,
bei dem eine obere und/oder eine hintere Kante der Antenneneinrichtung im Wesentlichen durch den Lichtleiter gebildet ist.

6. Kraftfahrzeug nach einem der vorhergehenden Ansprüche,
bei dem der Lichtleiter derart in die Antenneneinrichtung integriert ist, dass er für einen vor dem Kraftfahrzeug stehenden Beobachter, für einen hinter dem Kraftfahrzeug stehenden Beobachter und für einen seitlich zum Kraftfahrzeug stehenden Beobachter sichtbar ist.

7. Kraftfahrzeug nach einem der vorhergehenden Ansprüche,
mit einer zweiten Leuchte zum Signalisieren des Betriebszustandes der Diebstahlwarnanlage, die im Innenraum des Kraftfahrzeuges angeordnet ist, und die mit der ersten Leuchte gekoppelt ist.

8. Kraftfahrzeug nach einem der vorhergehenden Ansprüche,
bei dem die durch die erste Leuchte erzeugte Lichtstärke kleiner 0,5 Candela ist, insbesondere kleiner als 0,1 Candela ist.

9. Kraftfahrzeug nach einem der vorhergehenden Ansprüche,
bei dem die durch die erste Leuchte erzeugte Lichtstärke größer als 0,01 Candela ist.

10. Kraftfahrzeug nach einem der vorhergehenden Ansprüche,
bei dem die erste Leuchte derart ausgeführt ist, dass in Abhängigkeit von der Ansteuerung der ersten Leuchte durch die erste Leuchte Licht verschiedener Farbe abstrahlbar ist.

11. Kraftfahrzeug nach einem der vorhergehenden Ansprüche,
bei dem das Kraftfahrzeug eine Ladeeinrichtung mit zugeordnetem Ladesteuergerät aufweist, bei dem die erste Leuchte in Abhängigkeit von dem Betriebszustand der Ladeeinrichtung angesteuert wird, insbesondere derart, dass die Farbe des durch die erste Leuchte abgestrahlten Lichts von dem Betriebszustand der Ladeeinrichtung abhängt.

12. Kraftfahrzeug nach einem der vorhergehenden Ansprüche,
bei dem das Kraftfahrzeug eine Ladeeinrichtung mit zugeordnetem Ladesteuergerät aufweist, bei dem die erste Leuchte in Abhängigkeit von dem Betriebszustand der Ladeeinrichtung angesteuert wird, insbesondere derart, dass die Farbe des durch die erste Leuchte abgestrahlten Lichts und/oder die Dauer des Aktivzustandes und/oder des Passivzustandes der ersten Leuchte von dem Betriebszustand der Ladeeinrichtung abhängen.

13. Kraftfahrzeug nach einem der vorhergehenden Ansprüche,
bei dem durch die erste Leuchte der Betriebszustand der Ladeeinrichtung und der Betriebszustand der Diebstahlwarnanlage parallel derart signalisiert wird, dass durch die erste Leuchte vorranging das Licht, insbesondere die Lichtfarbe, zur Signalisierung des Betriebszustandes der Diebstahlwarnanlage erzeugt und/oder abgestrahlt wird.

14. Kraftfahrzeug nach einem der vorhergehenden Ansprüche,
bei dem der Betriebszustand der Diebstahlwarnanlage an das Ladesteuergerät signalisiert wird, und die erste Leuchte durch das Ladesteuergerät angesteuert wird.

15. Kraftfahrzeug nach einem der vorhergehenden Ansprüche,
bei dem durch die erste Leuchte Licht einer ersten Farbe erzeugt wird zur Signalisierung des Betriebszustandes der Diebstahlwarnanlage, und bei dem Licht zumindest einer anderen Farbe erzeugt wird zur Signalisierung des Betriebszustandes der Ladeeinrichtung.

## Claims

1. A motor vehicle
- with a theft warning system,
- with a first lamp for signalling the operating state of the theft warning system, and
- with an antenna device borne by the body of the motor vehicle and arranged outside the vehicle body,
- in which the first lamp is integrated in the antenna device,
- in which the antenna device is arranged on the motor vehicle roof,
- in which the first lamp is actuated dependent on the operating state of the theft warning system in such a way that the duration of an active state and/or a passive state of the first lamp depends on the operating state of the theft warning system,
in which the first lamp in the standby state of the theft warning system is switched in alternation into an active state and a passive state, the duration of the active state being in each case less than 0.1 seconds and the duration of the passive state being between one second and two seconds, and in which the first lamp in the alarm state of the theft warning system is switched in alternation into an active state and a passive state, the duration of the active state being in each case between 0.1 seconds and one second and the duration of the passive state being in each case between 0.1 seconds and one second.

2. A motor vehicle according to Claim 1,
in which the antenna device comprises a mobile radio antenna.

3. A motor vehicle according to one of the preceding claims,
in which the antenna device is in the shape of a fin.

4. A motor vehicle according to one of the preceding claims,
in which the first lamp comprises a light-emitting diode and a fibre-optic conductor, with light from the light-emitting diode being coupled into the fibre-optic conductor.

5. A motor vehicle according to one of the preceding claims,
in which an upper and/or a rear edge of the antenna device is formed substantially by the fibre-optic conductor.

6. A motor vehicle according to one of the preceding claims,
in which the fibre-optic conductor is integrated in the antenna device in such a way that it is visible to an observer standing in front of the motor vehicle, to an observer standing behind the motor vehicle and to an observer standing to the side of the motor vehicle.

7. A motor vehicle according to one of the preceding claims,
with a second lamp for signalling the operating state of the theft warning system which is arranged in the interior of the motor vehicle, and which is coupled with the first lamp.

8. A motor vehicle according to one of the preceding claims,
in which the luminous intensity generated by the first lamp is less than 0.5 candela, in particular is less than 0.1 candela.

9. A motor vehicle according to one of the preceding claims,
in which the luminous intensity generated by the first lamp is greater than 0.01 candela.

10. A motor vehicle according to one of the preceding claims,
in which the first lamp is embodied in such a way that depending on the actuation of the first lamp light of different colour can be emitted by the first lamp.

11. A motor vehicle according to one of the preceding claims,
in which the motor vehicle has a charging device with associated charge controller, in which the first lamp is actuated dependent on the operating state of the charging device, in particular in such a way that the colour of the light emitted by the first lamp depends on the operating state of the charging device.

12. A motor vehicle according to one of the preceding claims,
in which the motor vehicle has a charging device with associated charge controller, in which the first lamp is actuated dependent on the operating state of the charging device, in particular in such a way that the colour of the light emitted by the first lamp and/or the duration of the active state and/or of the passive state of the first lamp depend(s) on the operating state of the charging device.

13. A motor vehicle according to one of the preceding claims,
in which the operating state of the charging device and the operating state of the theft warning system are signalled in parallel by the first lamp in such a way that primarily the light, in particular the light colour, for signalling the operating state of the theft warning system is generated and/or emitted by the first lamp.

14. A motor vehicle according to one of the preceding claims,
in which the operating state of the theft warning system is signalled to the charge controller, and the first lamp is actuated by the charge controller.

15. A motor vehicle according to one of the preceding claims,
in which, by the first lamp, light of a first colour is generated for signalling the operating state of the theft warning system, and in which light of at least one other colour is generated for signalling the operating state of the charging device.

## Revendications

1. Véhicule comprenant :
- une alarme antivol,
- une première lampe permettant de signaler l'état de fonctionnement de l'alarme antivol, et
- un dispositif d'antenne porté par la carrosserie du véhicule et monté à l'extérieur de cette carrosserie,
véhicule dans lequel :
- la première lampe est intégrée dans le dispositif d'antenne,
- le dispositif d'antenne est monté sur le toit du véhicule,
- la première lampe est commandée en fonction de l'état de fonctionnement de l'alarme antivol de sorte que la durée de l'état actif et/ou de l'état passif de la première lampe dépende de l'état de fonctionnement de l'alarme antivol,
- lorsque l'alarme antivol est à l'état de repos la première lampe est en alternance à l'état actif et à l'état passif, la durée de l'état actif étant inférieure à 0,1 seconde et la durée de l'état passif étant située entre une seconde et deux secondes, et
- lorsque l'alarme antivol est à l'état d'alarme, la première lampe est en alternance branchée à l'état actif et à l'état passif, la durée de l'état actif étant située entre 0,1 seconde et une seconde et la durée de l'état passif étant située entre 0,1 seconde et une seconde.

2. Véhicule conforme à la revendication 1,
dans lequel le dispositif d'antenne comprend une antenne de radiotéléphonie mobile.

3. Véhicule conforme à l'une des revendications précédentes,
dans lequel le dispositif d'antenne a la configuration d'un aileron.

4. Véhicule conforme à l'une des revendications précédentes,
dans lequel la première lampe comporte une diode électroluminescente et une fibre optique, la lumière de la diode électroluminescente étant couplée dans la fibre optique.

5. Véhicule conforme à l'une des revendications précédentes,
dans lequel l'arête supérieure et/ou l'arête arrière du dispositif d'antenne et(sont) essentiellement formée(s) par la fibre optique.

6. Véhicule conforme à l'une des revendications précédentes,
dans lequel la fibre optique est intégrée dans le dispositif d'antenne de sorte qu'elle soit visible par un observateur situé à l'avant du véhicule, par un observateur situé à l'arrière du véhicule et par un observateur situé sur le côté du véhicule.

7. Véhicule conforme à l'une des revendications précédentes, comprenant une seconde lampe permettant de signaler l'état de fonctionnement de l'alarme antivol, qui est montée dans l'habitacle du véhicule, et est couplée à la première lampe.

8. Véhicule conforme à l'une des revendications précédentes,
dans lequel l'intensité de la lumière produite par la première lampe est inférieure à 0,5 Candela, en particulier inférieure à 0,1 Candela.

9. Véhicule conforme à l'une des revendications précédentes,
dans lequel l'intensité de la lumière produite par la première lampe est supérieure à 0,01 Candela.

10. Véhicule conforme à l'une des revendications précédentes,
dans lequel la première lampe est conçue de sorte que, en fonction de sa commande, de la lumière de différentes couleurs puisse être rayonnée par celle-ci.

11. Véhicule conforme à l'une des revendications précédentes, comportant un dispositif de chargement auquel est associé un appareil de commande de chargement, la première lampe étant commandée en fonction de l'état de fonctionnement du dispositif de chargement, en particulier de sorte que la couleur de la lumière rayonnée par cette première lampe dépende de l'état de fonctionnement du dispositif de chargement.

12. Véhicule conforme à l'une des revendications précédentes, comportant un dispositif de chargement auquel est associé un appareil de commande de chargement, la première lampe étant commandée en fonction de l'état de fonctionnement du dispositif de chargement, en particulier de sorte que la couleur de la lumière rayonnée par cette première lampe et/ou la durée de l'état actif et/ou de l'état passif de celle-ci dépende(nt) de l'état de fonctionnement du dispositif de chargement.

13. Véhicule conforme à l'une des revendications précédentes,
dans lequel la première lampe signale parallèlement l'état de fonctionnement du dispositif de chargement et l'état de fonctionnement de l'alarme antivol de sorte que la première lampe, produise et/ou rayonne en priorité la lumière, en particulier, la couleur de la lumière permettant de signaler l'état de fonctionnement de l'alarme antivol.

14. Véhicule conforme à l'une des revendications précédentes,
dans lequel l'état de fonctionnement de l'alarme antivol est signalé sur l'appareil de commande de chargement et la première lampe est commandée par l'appareil de commande de chargement.

15. Véhicule conforme à l'une des revendications précédentes,
dans lequel la première lampe produit une lumière ayant une première couleur pour signaler l'état de fonctionnement de l'alarme antivol, et de la lumière d'au moins une autre couleur est produite pour signaler l'état de fonctionnement du dispositif de chargement.
